# EUROPEAN PATENT APPLICATION

(11) **EP 4 530 954 A1**
(43) Date of publication of application: **02.04.2025**
(21) Application number: 23465548.8
(22) Date of filing: 29.09.2023
(51) Int. Cl.: G06Q 10/101

(54) **SYSTEM AND METHOD FOR HANDLING SOVEREIGN DATASETS WITH SHARED OWNERSHIP**

(71) Applicant: Siemens AG Österreich, 1210 Wien (AT)
(72) Inventor: The designation of the inventor has not yet been filed
(74) Representative: Siemens Patent Attorneys

(57) **Abstract**

Present invention concerns a method for managing digital contracting. The method comprises:
receiving (C10) a data access request indicating a data consumer (140) requesting access to a dataset, the dataset having multiple data owners. (310) ;
determining (C12) a contract based on a set of contract conditions, wherein the set of contract conditions comprises multiple subsets of conditions, each subset pertaining to one of the multiple data Owners (310); and
providing (C14) the contract.

The invention also concerns related devices.

## Description

Present invention concerns approaches of contracting data, in particular of providing access to a dataset having multiple owners.

### Background of the Invention

Data is becoming an increasing valuable resource; access to data (e.g., in the form of a dataset) may be contract-based, e.g., in a sovereign data approach.

Sovereign data exchange is discussed in literature, mostly by initiatives such as Gaia-X and IDSA (International Data Spaces Association), which describes a reference architecture for creating and sharing sovereign datasets.

### Disclosure of the Invention

A problem underlying the invention consists in providing an improved technique to manage digital contracting for data like sovereign data, and/or for a dataset with multiple owners.

The invention solves the given problem by means of subject-matter defined in enclosed independent claims. Dependent claims describe preferred embodiments.

There is disclosed a method for managing digital contracting. The method comprises receiving a data access request indicating a data consumer requesting access to a dataset, the dataset having multiple data owners. The method also comprises determining a contract based on a set of contract conditions, wherein the set of contract conditions comprises multiple subsets of conditions, each subset pertaining to one (e.g., at least one) of the multiple data owners. The method also comprises providing the contract.

Accordingly, a dataset with multiple owners may be contracted for, taking into consideration their respective contract conditions (also referred to as terms or contract terms). The method may be performed by a computer system, and/or a contract manager. High levels of automatization may be provided, while facilitating data sovereignty for multiple data owners.

The method may comprise requesting contract conditions. The contract conditions may be requested from one or more data owners (e.g., all the owners, and/or all the owners but the data provider). A corresponding request may indicate the dataset, and/or other owners, and/or the data consumer, and/or data provider. The contract conditions may be adapted (e.g., by the data owner), based on such information, and/or may represent general terms and conditions. It may be considered that requesting contract conditions may be based on, and/or triggered by, and/or in response to, receiving the data access request. Thus, dynamic contract determination may be provided.

It may be considered that the set of contract conditions may comprise restrictive conditions and/or permissive conditions. Different data owners may comprise different restrictive and/or permissive conditions. The conditions may be extracted according to such types, e.g., to be combined and/or merged into a subset of permissive conditions, and/or into a subset of restrictive conditions. Determination of the contract may be based on such subsets and/or types and/or merging.

It may be considered that the contract is a smart contract. This may allow utilising cryptographical methods and/or a blockchain approach for identification of the signees, and/or for verification and/or validation of the contract.

It may be considered that the data access request may be received from a data provider. The data access request may be based on a request from a data consumer and/or reflect such a request. In some cases, the data access request may be received from the data consumer.

The contract may pertain to a data provider and/or the data owners; a contract pertaining to an entity may be considered a contract in which the entity is party to, and/or provided a signature to the contract. The contract may in general pertain to the data consumer. In some cases, there may be a contract between the data provider and data consumer, in which the (other) data owners may be not visible. A second contract between data provider and data owners may be determined, e.g., to allow full legal coverage.

The contract may be provided to a data provider and/or the data owners, and/or the data consumer. For example, the contract manager may provide the contract, to the data provider, which may provide it to the data consumer. Direct provision of the contract to more than one entity by the contract manager may be considered. Thus, a transparent information policy may be implemented.

Access to the data set may be provided for the data consumer based on the contract. Access may be provided based on the data consumer signing and/or accepting the contract. The access may be provided by the data provider. Thus, data sovereignty may be achieved.

The method may comprise logging information pertaining to communication regarding the contract. The information may be logged in a logging service like an external database or clearing house, and/or in a contract manager. In some cases, the contract manager may provide the information to be logged to the external database and/or clearing house and/or another component: In general, logged information may be accessible (e.g., upon request) by the data provider and/or data owners and/or data consumers and/or one or more federated services.

There is also considered a contract manager adapted for performing a method as described herein. The contract manager may comprise, and/or be implemented as, software and/or hardware, and/or may represent a component of a computer system.

A computer system adapted for performing a method as described herein is proposed. The computer system may in general comprise, and/or be connected or connectable, to one or more data providers, and/or one or more data consumers, and/or one or more data owners, and/or one or more federated services (or service providers), and/or one or more contract manager/s.

The computer system may in particular comprise a contract manager and a data provider, wherein determining the contract may be performed by the contract manager, and/or the data provider may provide the data access request for reception by the contract manager.

Moreover, there is proposed a computer program product comprising computer-executable instructions and/or code causing a computer system to execute a method as described herein when executed by and/or on the computer system. The computer system may be any computer system as described herein. A computer program product, and/or a computer system, may comprise a specific module for each action of a method performed, e.g., a module for receiving the data access request (e.g., a connector), and/or a module for determining the contract (e.g., contract manager), and/or a module for providing the contract (e.g., a connector and/or distributor).

A storage medium storing a computer program product as described herein is also described. A computer program product may be implemented as, and/or comprise, software. A storage medium may comprise hardware.

A set of terms provided by a data owner may be considered the data owner's contract. Determining the contract may be based on merging contract conditions of the data owners, and/or based on requesting contract conditions from one or more of the data owners (e.g., all the data owners, or all the data owners with the exception of the data provider, if such provides its conditions with the data access request).

The contract may be a new contract, and/or may be created upon receiving the data access request, and/or may be created dynamically (e.g., on receiving the request). Thus, dynamic and/or adaptive contracting may be provided, allowing adapting to changing conditions and/or to different conditions for different consumers. In some cases, the contract may be an old contract, e.g., one determined or created earlier. For example, the data owners may indicate that their conditions and/or terms have not changed against earlier conditions and/or terms, which may be available at the contract manager.

The contract may be provided to another component of a computer system, and/or a data consumer, and/or a data provider, and/or a federated service, e.g., a broker. Providing the contract may comprise providing information representing the contract; the contract may be provided to and/or via more than one component of the system.

The data access request may indicate the dataset, and/or the owner/s, and/or the data consumer requesting. The request may be received from the data consumer, and/or the data provider, and/or another component, in particular a broker.

A data consumer may in general be an entity (or component, the terms may be considered interchangeable) which is not data owner, and/or may whish to access the dataset. The dataset may be indicated by federated services, e.g., a broker, e.g., based on a search or request by the data consumer. A data provider may be adapted to provide access to the dataset. A contract manager may be an entity adapted to determine the contract.

A contract condition pertaining to a data owner may be a condition reflecting and/or representing a condition provided by the data owner. In some cases, a condition may pertain to two or more data owners. Merging contract conditions may comprise determining a set of conditions including and/or based on the merged contract conditions. For example, the set of conditions may combine all the conditions (e.g., if they are non-overlapping), and/or consolidate duplicates (such that only one condition is present in the contract), and/or using the least permissive condition for overlapping conditions (e.g., lowest time duration of access, and/or lowest data volume), and/or not including permissive conditions contradicting restrictive conditions. The contract may be determined to represent a union of conditions, e.g., representing the least permissive conditions and/or most restrictive conditions pertaining to, and/or provided by the data owners.

The method may especially be carried out, completely or in part, by electronic execution means like a computer system. To these ends, the method may be formulated as a computer program product with program code means. The above-described system may comprise the computer system. Advantages or features of the method may apply to the method and vice versa.

### Brief Summary of the Enclosed Figures

The above-described properties, features and advantages of present invention as well as the way they are achieved will be made clearer and better understandable in the light of the following discussion, making reference to exemplary embodiments shown in accompanying figures, in which
- Figure 1: shows an exemplary system;
- Figure 2: shows an exemplary signalling flow;
- Figure 3: shows an exemplary system according to the invention;
- Figure 4: shows an exemplary signalling flow according to the invention; and
- Figure 5: shows a flow diagram of an exemplary inventive method.

### Detailed Exemplary Embodiments of the Invention

Sovereign datasets with shared ownership are discussed, which can be very common in real life, because multiple parties may work together to collect data (e.g., data regarding the traceability of a supply chain may include data from different tier suppliers, consumers, and transportation companies). A component (e.g., contract manager) that handles the interactions with multiple data owners and enables sovereign data exchange for datasets with shared ownership may be considered. The proposed component may be an addition to existing reference architectures of the literature (e.g., described by IDSA or Gaia-X) for integrating the functionality of handling the shared ownership of sovereign datasets.

A component like a software component is proposed, which may be incorporated within a system that follows a standard architecture for sovereign data exchange (e.g., the reference architecture provided by IDSA). This component may provide an additional feature to the system, providing a functionality to exchange (e.g., providing access to) one or more sovereign datasets with shared ownership. A dataset with multiple owners may be represented by a dataset (e. g., a sovereign dataset) with shared ownership.

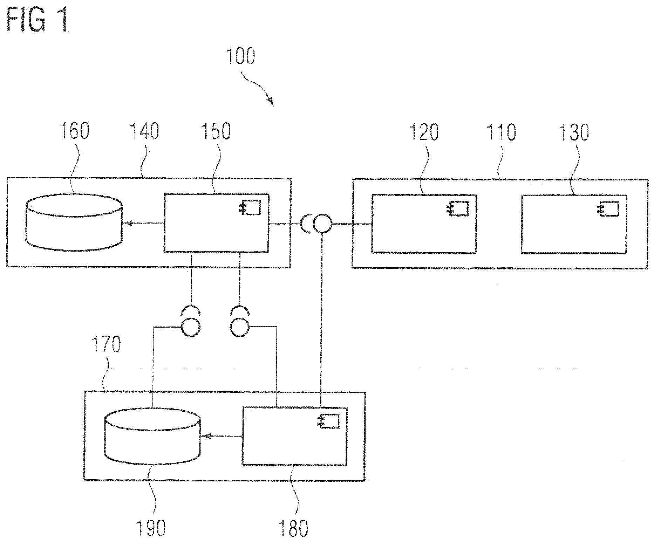

A typical (computer) system 100 for sharing (e.g., providing access to) sovereign datasets is shown below in Figure 1. In this specification, communication connections and/or interfaces are shown as circles with connected lines. A connector may in general comprise software and/or hardware, e.g., one or more communication interfaces.

A system 100 may include federated services 110. Federated services 110 (which may be implemented on, and/or on a part of, a computer system) : This represents components that are part of an infrastructure for sovereign data exchange, and may be maintained and/or provided by an infrastructure provider (e.g., the IDSA, or any other organization) . Two exemplary services or components of the federated services 110 may comprise:
A broker 120. Broker 120 may act as a central point for data providers that want to submit metadata (e.g., origin, content description, properties) of the dataset/s to be shared. Data consumers that want to search for datasets with specific characteristics (e.g., based on origin, content description, properties) may be connected and/or connecting thereto for such search. A broker may be implemented in, and/or comprise, software and/or hardware, e.g., a computer and/or computer system, and/or one or more broker modules or components.

A clearing house 130. Clearing house 130 may log (e.g., all or a selection of) transactions that occur in the system (e.g., interactions between data providers and data consumers) . The data in the clearing house 130 may be immutable (e.g., protected against change and/or deletion) and may be used for resolving conflicts (e.g., if a data consumer claims that they have not received agreed dataset by the data provider) . A clearing house may be implemented in, and/or comprise, software and/or hardware, e.g., a computer and/or computer system, and/or one or more clearing house modules or components.

The system may comprise, and/or may be connected or connectable, to one or more data consumers 140. A data consumer 140 may be an entity (e.g., an individual or organization) that can search for datasets in the broker 120, and may request to acquire access to a specific dataset from the dataset's data provider. Multiple data consumers 140 may exist at the same time, which may search for the same or different datasets. A data consumer may be implemented in, and/or comprise, software and/or hardware, e.g., a computer and/or computer system, and/or one or more consumer modules or components.

A data consumer 140 may comprise a connector 150. A connector 150 may be component (e.g., software and/or hardware, e.g., one or more communication interfaces) that can be used for requesting and/or exposing and/or accessing one or more sovereign datasets. The data consumer 140 may comprise a database 160, which may represent the memory storage or storage medium that may be used by the connector 150 and/or data consumer 140 to store the requested dataset after acquiring and/or accessing it.

The system 100 may comprise a data provider 170. Data provider 170 may comprise an entity (e.g., individual or organization) that submits the metadata of datasets in the broker 120, and/or is responsible for exposing and/or providing this dataset to a data consumer 140 upon agreement (e.g., based on a contract). Multiple data providers 170 may exist at the same time. Two exemplary components of the data provider 170 may comprise a connector 180 and a database 190. A data provider may be implemented in, and/or comprise, software and/or hardware, e.g. , a computer and/or computer system, and/or one or more consumer modules or components.

The connector 190 may be a component, e.g., software component, that may handle the communication with the connector 150 of the data consumer/s 140. The connector 150 of the data consumer 140 may request a dataset from the data provider 170, and/or the connector 180 of the data provider 170; the data provider connector 180 may be responsible and/or adapted for providing access to the requested dataset.

Database 190 may represent the memory storage and/or storage medium that hosts and/or stores the dataset of the data provider 170.

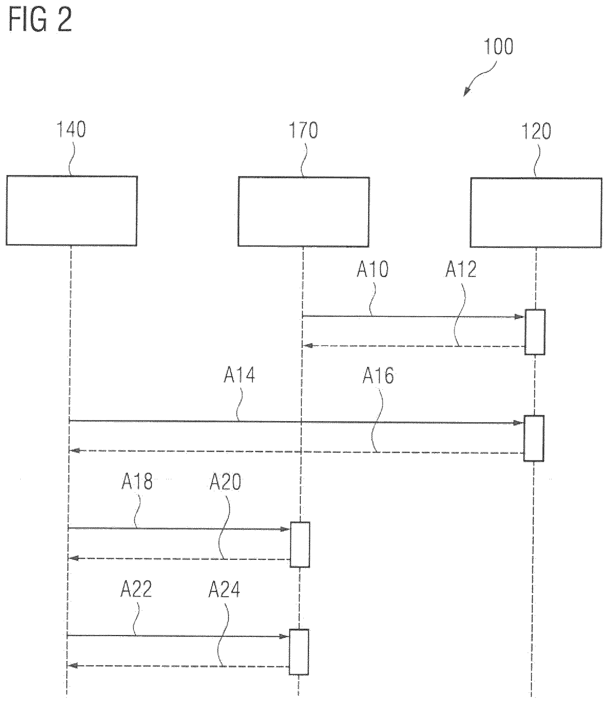

Example interactions that take place to facilitate a sovereign data exchange are shown in Figure 2. Exemplary signals and functions are provided in pseudo-code.

A data exchange or signalling flow of Figure 2 may comprise:
A data provider 170 may submit A10 the dataset' s metadata to the broker 120 (submitDataset (metadata)). Acceptance of the metadata may be signalled A12 by the broker 120.

A data consumer 140 may search A14 the metadata of the broker 120 to find a dataset' s ID (datasetID), and also the ID of the provider 170 (providerID) that has this dataset, which may be provided A16 by the broker 120.

The data consumer 140 may request A18 the dataset from the data provider 170 (requestDataset(providerID, datasetID).

The data provider 170 may respond A20 with a contract (contract=getUSageTerms (datasetID)) that may include the terms and/or conditions of use of the dataset.

The data consumer 140 may sign A22 (e.g., based on user input) the contract (acceptTermsAndSign(contract) and may thus agree to the terms of use (according to the contract).

The data provider 170 may provide A24 the data consumer 140 with access to the requested dataset. In general, providing access to the dataset may comprise transmitting the dataset as a whole and/or parts thereof, and/or allowing access to data of the dataset of the data provider 170, e.g., in the database 190 of the data provider 170.

If a dataset belongs to multiple data owners, the terms of use of other data owners may not be reflected in the data provider's contract.

In this case, additional functionality may be provided, e.g., an additional component, which may be a contract manager. The contract manager may for example be implemented as one or more of: i) an independent service operated by any participant and offered to any other participant, ii) offered by the infrastructure provider as a federated service similar to the broker and the clearing house, or iii) integrated within one (or more) data provider(s). A role of the contract manager may comprise contacting all the data owners, and creating a contract that meets the requirements not only of the data provider, but also of any additional data owners. This may facilitate achieving data sovereignty since all the data owners of a dataset may have to have a say in the way that data is shared and processed.

While the data provider 170 may the entity that submits the dataset's metadata to the broker 120, and/or may be the entity that potentially exposes the dataset to a data consumer 140, the data owners represent other entities that co-own the dataset. It is possible that a data owner can also act as a data provider. Thus, it may be considered that a difference between data owner and data provider may be that the data provider is the data owner who was contacted by a data consumer that requested access to the dataset; however, in some cases, a data provider may not be a data owner (e.g., for an externalized service scenario. It may be assumed that each data owner of a dataset may be aware of all the other data owners. The set of all the data owners of a dataset may be included in the dataset's metadata which is submitted to the broker. It should be noted that the metadata may be provided by a different component than the component providing access to the dataset and/or storing the dataset; the metadata may in general indicate the dataset (e.g., an ID of the dataset), and/or the data owner/s (e.g., an individual ID for one or more owners, and/or a group ID for an owner group, and/or multiple group IDs for different owner subgroups) . An ID may be represented by a name and/or identifier and/or address (e.g., URL and/or IP address) .

A contract (e. g., by the data provider or a data owner) may include various terms of use; terms of use and conditions of use may be considered to be interchangeable. Terms of use may refer to various aspect of using the data of the dataset. Examples of terms may comprise: a time period for which reading or processing the data is allowed (e.g., number of days), and/or the type of allowed processing of the data such as: mathematical operations (e.g., median, max, etc.), predictive methods (e.g., regression, classification, clustering, labeling, etc.), and/or allowed presentation of the data (e.g., plotting representations like bar graphs, line graphs, box plots, etc.), and/or distribution policies regarding sharing the data and/or the outcomes of processing the data, e.g. with third parties, etc.

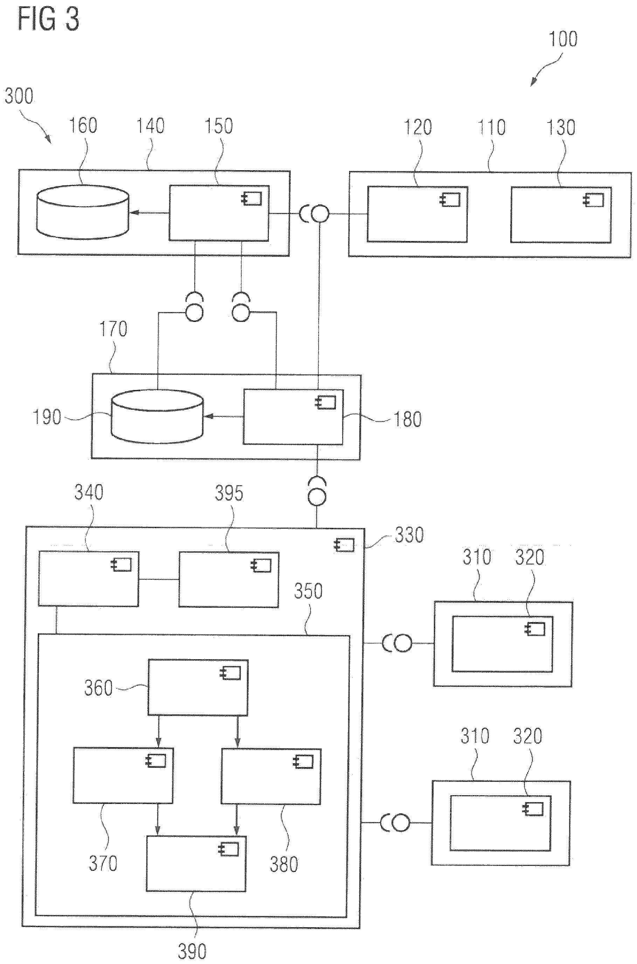

An exemplary system 300 with a contract manager 330 is shown in Figure 3. The system 300 may be implemented as computer system, and/or may comprise and/or be connected or connectable to one or more federated services 110, and/or data consumer/s 140, and/or data providers 170. The federated services 110 and/or data consumer/s 140 and/or data provider/s 170 may be implemented to comprise the functionality as described with reference to Figure 1 and thus use the same reference numerals.

In Figure 3, the contract manager 330 is shown as an independent or separate service, however it may be included in one of the other components, e.g., federated services 110, and/or broker 120, and/or data provider 170, and/or one of the data owners 310. The broker 120 may be adapted to provide a contract, e.g., provided by the contract manager 330, or may omit contract providing functionality, and/or may indicate to the data consumer 140 and/or data provider 170 that a contract is to be provided by another component (e.g., the data provider 170 and/or contract manager 330).

The system 300 may comprise, and/or be connected or connectable to, a plurality of data owners 310; in the example of Figure 3, two data owners 310 are shown, although the number of data owners could be larger. Each data owner 310 may comprise a connector 320.

As shown in Figure 3, the contract manager 330 may mediate between the data provider 170 and/or the various data owners 310 of the requested dataset. The connector 320 of a data owner 310 may be implemented and/or adapted for corresponding communication. In general, the contract manager 330, and/or each of its components and/or components it is connected or connectable to, may be implemented in, and/or comprise, software and/or hardware, e.g., a computer and/or computer system, and/or one or more associated modules or components.

The contract manager 330 may comprise, and/or be connected and/or connectable to, one or more of the following components, e.g., with one or more communication interfaces and/or one or more corresponding connectors of the contract manager 330 (not shown) . The components may provide functionality; in implementation, the contract manager 330 and/or a component may provide multiple of such functionalities.

A contract collector 340 may be provided. Contract collector 340 may be adapted collect contracts and/or contract terms (e.g., including terms of use) of all the data owners 310 (the data provider 170 may also be considered as a data owner in this example) . This may include, and/or be based on, requesting and/or receiving such terms from the data owners 310. Addresses and/or IDs of these owners (or group/s) may be provided and/or indicated (e.g., to the contract manager 330) by the data provider 170, and/or the federated services 110. In some cases, the contract manager 330 may have the addresses and/or IDs stored in a storage media, e.g., associated to the dataset and/or IDs.

A contract combiner 350 may be provided. Contract combiner 350 may be adapted to combine the terms and/or contracts of all the data owners 310, and/or may be adapted to ensure that all the terms of use are preserved (for and/or in the contract). To achieve this, the contract combiner 350 may include one or more of the following components or modules and/or functionalities.

A contract decomposer 360 may be considered. The contract decomposer 360 may be adapted to separate permissive terms of use of the contracts from restrictive terms of use. For example, permissive terms of use may be formulated by an allowed action such as: predictive methods are allowed. Restrictive terms may be formulated by negation such as: predictive methods are not allowed.

A permissive terms handler 370 may be provided. Permissive terms handler 370 may be adapted to acquire the permissive terms of use of all the contracts and/or owners from the contract decomposer 360. It may be adapted to remove duplicate terms, which may occur due to collecting contracts and/or terms from multiple owners. After the duplicates are removed, the terms of each owner may be considered as a set. The terms of use that belong to the intersection of all the sets from the different owners may be considered to represent the permissive terms of use which are agreed by all the data owners. This intersection may represent a new set and may be sent to a contract composer 390.

A restrictive terms handler 380 may be considered. The restrictive terms handler 380 may be adapted to acquire the restrictive terms of use of all the contracts and/or owners from the contract decomposer 350. It maybe adapted to remove duplicate terms, which may occur due to collecting contracts from multiple owners. After the duplicates are removed, the terms of each owner may be considered as a set. The (restrictive) terms of use that belong to the union of all the sets from the different owners may represent the restrictive terms of use which are agreed by all the data owners. This union may be considered a new set and may be sent to the contract composer. In some cases, it may be considered that from two or more restrictive terms of the same type (e.g., pertaining to time, and/or data volume), the most restrictive of the terms may be utilised. For example, if one data owner restricts the use of the dataset to 3 days, and another one to two days, the restriction to two days may be used.

A contract composer 390 may be provided. The contract composer 390 may create a (new) contract, which may include the permissive and restrictive terms of use that satisfy all the data owners. If there are conflicts between permissive and restrictive terms (e.g., the permissive being that predictive methods are allowed, while the restrictive being that predictive methods are not allowed), the restrictive terms prevail; the permissive term may be omitted. This may ensure that the new contract does not include any terms that are explicitly denied by any data owner.

A contract distributor 395 may be provided as part of the contract manager 330, e.g., as a part separate from the contract combiner 350. As soon as the data consumer 140 agrees to the terms of use of the new contract, the data provider 170 may have proof of that agreement (e.g., a digitally signed contract) . This proof may be provided to the contract manager 330, and/or the contract distributor 395, which may be responsible for, and/or adapted for receiving this proof, and/or for sending an indication of this proof and/or of the contract to all the data owners 310 (e.g., without the data provider). In some variants, the contract manager 330, and/or the contract distributor 395, may be adapted to form a digital contract between the data owners (e.g., including the data provider); such contract may indicate acceptance of the contract with the data consumer, and/or may include the data owners as parties to the contract with the data consumer (e.g., such that the data owners sign the contract with the data consumer).

An exemplary pseudocode of the process to combine the contracts and/or terms of all the data owners is shown below in algorithm 1.

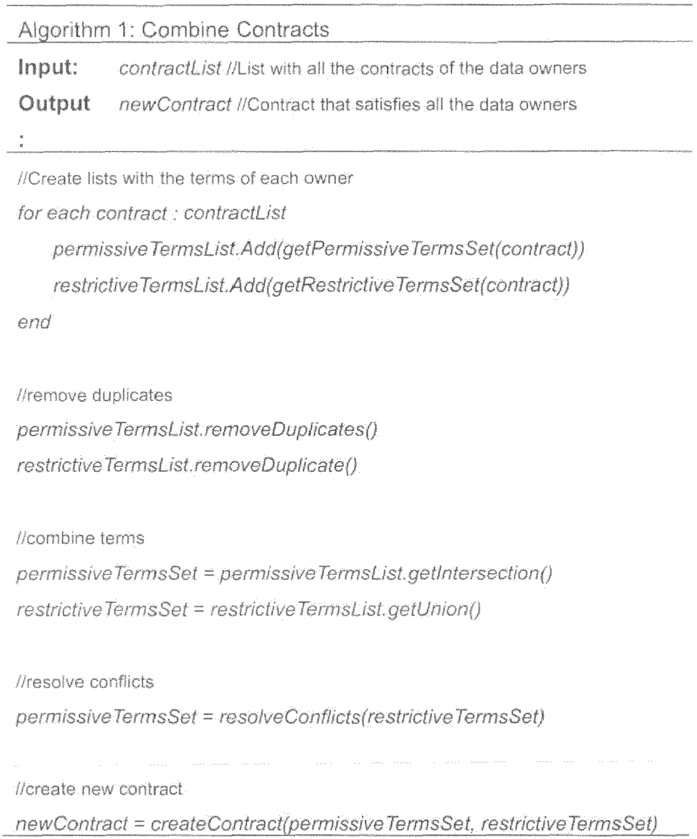

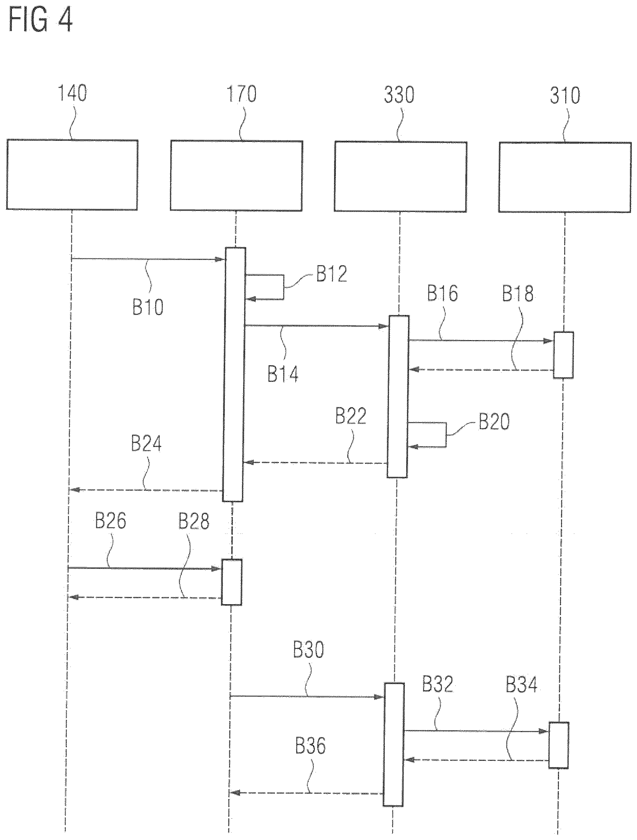

Another view of the system is depicted in Figure 4, which shows exemplary interactions that may take place among the data consumer 140, the data provider 170, the contract manager 330, and the (one or more) data owners 310.

The data consumer 140 may request B10 a dataset (requestDataset(datasetID)) from the data provider 170. The provider 170 may then check the metadata of the dataset and makes and/or provide B12 a list (ownerList)findOwners(datasetID)) of all the owners; this list may also be provided by another component, e.g., the broker 120 or federated services 110. The provider 170 may send B14 this list, potentially along with the dataset's ID and/or its own contract and/or terms (requestNewContract(ownerList, datasetID, contract)), e.g., if it is a data owner itself (e.g., the data provider's contract including terms of use of the dataset) to the contract manager 330. This may be considered a request for a new contract to be provided.

The contract manager 330 may contact B16 all the (other) data owners 310 (requestContracts(datasetID)), e.g., requesting their contracts and/or terms. Contract manager 350 may collect or receive B18 each owner's contract and/or terms regarding the use of this specific dataset and/or data consumer. After all the contracts and/or terms are collected, the contract manager 330, e.g., utilising the combiner 350, may merge B20 all the terms of use using the permissive and restrictive terms handlers 360, 370, and/or may create the new contract (newContract=combineContracts(contracts, contract)).

This new contract may be considered to represent the consensus of the intended use of the dataset considering all the data owners. The new contract is then sent B22 to the data provider 170, and in turn B24 to the data consumer 140. The data consumer 140 may agree to the terms of use by signing the new contract and may send B26 the agreement to the data provider 170 (acceptTermsAndSign (contract)), and may acquires access B28 to the dataset. Before access, and/or parallel and/or after providing access, proof of the signed contract, and/or the signed contract, may be provided B30 by the data provider 170 (or the data consumer 140) to the contract manager 330.

The contract manager 330 (e.g., utilising the contract distributor 395) may distribute B32 the contract and/or proof of the signed contract, and/or indication thereof, to all the data owners 310 (potentially excluding the data provider, which may already be informed correspondingly). The data owner/s 310 may in response indicate B34 success and/or acknowledgement of the corresponding information to the contract manager 330.

If all data owners targeted by the distribution indicate success and/or acknowledgement, the contract manager 330 may indicate success and/or acknowledgement to the data provider 170 and/or data consumer 140.

Interactions that occur among the components (e.g., components 110, 140, 170, 330, 310) of the system may be logged in the clearing house 130. Thus, even though the data owners do not necessarily interact with the data consumer 140 directly, they have both a signed contract (or indication of proof thereof) with the agreed terms of use of the dataset, and additional proof of the transactions between data consumer 140 and data provider 170 through the logs of the clearing house 110. This way, the data owners 310 may be informed about the use of their data, and may actively take part in defining the contract, facilitating achievement of data sovereignty.

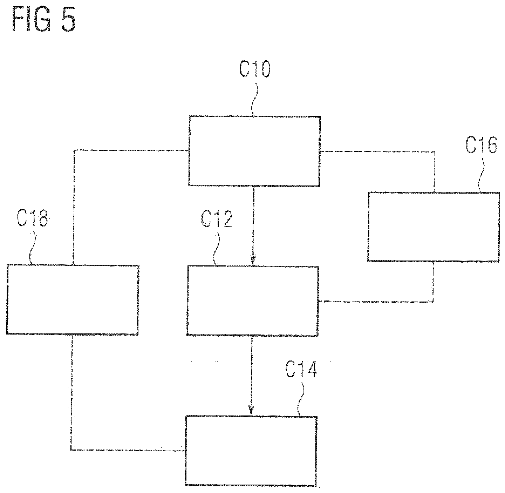

Figure 5 shows a schematic flow diagram of an exemplary method of the invention. In an action C10, a contract manager 330 or other component (e.g., including the contract manager functionality) receives a data access request indicating a data consumer 140 requesting access to a dataset. The dataset has multiple data owners 310.

In an action C12, the component determines a contract based on a set of contract conditions, wherein the set of contract conditions comprises multiple subsets of conditions, each subset pertaining to one of the multiple data owners. Determining the contract may be based on receiving the data access request.

In an action C14, the component provides the contract, e.g., to a data provider 170 and/or the data owners 310.

Optionally, in an action C16, contract conditions may be requested from the data owners (in some cases, excluding the data provider, e.g., if such already provided its conditions as data owner) . Action C16 may be based on, and/or triggered by, and/or in response to receiving the data access request in action C12. Conditions provided by the data owner/s in response to the request may be basis for determining the contract.

In an action C18 logging of information pertaining to communication regarding the contract may be performed. C18 may be in parallel to the other actions involving exchange of information between components. Logged information may be stored locally, e.g., in the contract manager 330, or be provided to a logging service (e.g., a clearing house).

The invention facilitates different organizations working together in order to improve the efficiency of their operations. These collaborations usually generate huge amounts of data. Such data bear value both as the subject of processing (e.g., since processing data can reveal bottlenecks and other inefficiencies), and as a product itself (since datasets and/or access thereto can be sold and bought). For example, transportation companies working with suppliers and consumers may produce data regarding supply chains, routes, content, pick-up and delivery locations, fuel consumption, and traffic conditions, among others. Such datasets can be of great value, and this invention enables sharing them using a sovereign data exchange system (such a system may be a system as described herein, providing access to a dataset based on a contract; the dataset may have multiple owners).

In particular, operation of an architectural component that can be added to sovereign data exchange systems without significant changes to other existing components may be considered. For example, the proposed contract manager could be a federated service offered by the infrastructure provider, or an application that is offered through the system's app store. This way, this invention could be leveraged by data providers with little effort while providing improved functionality (e.g., creating a contract representing all data owners).

The dataset and/or invention may in particular pertain to an industrial supply chain. There may be many benefits to monitor an industrial supply chain, such as the early detection of shortages and bottlenecks. Datasets which include supply chain information from different organizations (e.g., different tier suppliers and OEMs) may be managed (e.g., provided and/or exchanged) based on the concept of digital sovereignty or data sovereignty.

Alternatively, the dataset and/or invention may pertain to an insurance scenario. In industrial manufacturing, there are scenarios in which a plant owner leases equipment that is used by a machine builder for producing products. The equipment is usually insured by an insurance company. In cases that there are failures in the equipment, the insurance company may need to acquire datasets which include data that can belong to the plant owner, the leasing company, and the machine builder. The insurance company may acquire such dataset/s based on the digital sovereignty concept discussed herein.

Another use case pertains to hospitals. Hospitals usually collect data from their patients and use this data for various reasons such as medical research and analytics. A corresponding dataset may be made accessible based on allowing the patients to have a say in the way their data is used, by considering the patients as data owners. For example, the patients could choose to share their data for medical research processing, while forbidding the use of their data for commercial reasons.

Moreover, energy companies may acquire data from households using meters, and use this data for billing, analytics, and other purposes. The house owners may be considered as data owners in the context of this invention. Thus, the house owners may have a say in the way their data is used as envisioned by the concept of digital sovereignty.

A computer system may comprise processing circuitry, and/or a computer system, and/or processing circuitry may comprise one or more computers, and/or may comprise one or more components and/or may be a distributed system, e.g., interconnected via suitable communication interfaces. Different components may perform different actions, e.g., based on exchanging information via the interface/s. A computer system in general may be and/or comprise one or more computers and/or controllers and/or processing circuitries. Hardware may in general comprise, and/or represent, a computer system and/or processing circuitry, and/or one or more storage media.

The proposed method may especially be carried out, completely or in part, by electronic execution means like a computer system. To these ends, the method may be formulated as a computer program product with program code means (e.g., instructions, which may in general be computer-readable and/or computer-executable). Advantages or features of the method may apply to the method and vice versa.

In general, circuitry may comprise integrated circuitry. Integrated circuitry or processing circuitry (which may be considered a form of circuity) may comprise one or more processors and/or controllers (e.g., microcontrollers), and/or ASICs (Application Specific Integrated Circuitry) and/or FPGAs (Field Programmable Gate Array) and/or SOCs (System-on-a- Chip), or similar.

In some cases, integrated circuitry may represent one or more components and/or modules, e.g., for processing circuity and/or a device; such a component and/or module may represent a memory and/or processor and/or processor core and/or auxiliary component and/or specific application component, and/or may be connected or connectable to a communication interface, in particular to a bus, e.g., a data bus or address bus, and/or a serial or parallel connection interface. It may be considered that processing circuitry comprises, and/or is (operatively) connected or connectable to one or more memories or memory arrangements or storage media, which may be non-transitory.

A storage medium or memory arrangement may comprise one or more memories. A memory or storage medium may be adapted to store digital information. Examples for memories or a storage medium may comprise volatile and non-volatile and/or non-transitory memory, and/or Random Access Memory (RAM), and/or Read-Only-Memory (ROM), and/or magnetic and/or optical memory, and/or flash memory, and/or hard disk memory, and/or EPROM or EEPROM (Erasable Programmable ROM or Electrically Erasable Programmable ROM). A storage medium may be distributed, e.g., over a one or more similar or different components adapted to store digital information.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

Independent of the grammatical term usage, individuals with male, female or other gender identities are included within the term.

## Claims

1. Method for managing digital contracting, the method ccmprising:
receiving (C10) a data access request indicating a data consumer (140) requesting access to a dataset, the dataset having multiple data owners (310);
determining (C12) a contract based on a set of contract conditions, wherein the set of contract conditions comprises multiple subsets of conditions, each subset pertaining to one of the multiple data owners (310); and
providing (C14) the contract.

2. Method according to one of the preceding claims, the method comprising requesting (C16) conditions.

3. Method according to one of the preceding claims, wherein the set of contract conditions comprise restrictive conditions and/orpermssive conditions.

4. Method according to one of the preceding claims, wherein the contract is a smart contract.

5. Method according to one of the preceding claims, wherein the data access request is received from a data provider (170).

6. Method according tc one of the preceding claims, wherein the contract pertains to a data provider (170) and/or t.he data owners (310).

7. Method, according to one of the preceding claims, wherein the contract is provided to a data provider and/or the data owners and/or the data consumer.

8. Method according to one of the preceding claims, wherein access to the data set is provided for the data consumer (140) based, on the contract.

9. Method according to one of the preceding claims, the method comprising logging (C18) information pertaining to communication regarding the contract.

10. Contract manager (330) adapted for performing a method according to one of the preceding claims.

11. Computer system (300) adapted for performing a method according to one of claims 1 to 9.

12. Computer system (300) according to claim 11, comprising a contract manager (330) and a data provider (170), wherein determining the contract is performed by the contract manager (330), and/or the data provider (170) provides the data access request for reception by the contract manager (330).

13. Computer program product comprising computer-executable instructions causing a computer system (300) to execute a method according to one of claims 1 to 9 when executed by the computer system.

14. Storage medium storing a computer program product according to claim 13.
